(19) **Europäisches Patentamt / European Patent Office / Office européen des brevets**

(11) **EP 1 632 764 B1**

(12) # EUROPÄISCHE PATENTSCHRIFT

(45) Veröffentlichungstag und Bekanntmachung des Hinweises auf die Patenterteilung:
**06.03.2019 Patentblatt 2019/10**

(51) Int Cl.:
**G01L 3/10** *(2006.01)*

(21) Anmeldenummer: **04104287.0**

(22) Anmeldetag: **06.09.2004**

(54) **Verfahren und Einrichtung zur Ermittlung von Drehmomenten**

Method and apparatus for determining torques

Dispositif et méthode de détermination d'un couple

(84) Benannte Vertragsstaaten:
**DE FR GB**

(43) Veröffentlichungstag der Anmeldung:
**08.03.2006 Patentblatt 2006/10**

(73) Patentinhaber: **Getrag Ford Transmissions GmbH**
**50725 Köln (DE)**

(72) Erfinder: **Kather, Lutz**
**53909, Zülpich (DE)**

(74) Vertreter: **Wagner Albiger & Partner**
**Patentanwälte mbB**
**Siegfried-Leopold-Straße 27**
**53225 Bonn (DE)**

(56) Entgegenhaltungen:
EP-A- 0 325 517     EP-A- 0 682 238
EP-A- 1 382 950     EP-A2- 0 313 999
DE-A1- 19 730 398     DE-A1- 19 817 886
FR-A1- 2 661 246     US-A- 4 680 976
US-A1- 2003 196 496     US-A1- 2004 011 138

• PATENT ABSTRACTS OF JAPAN Bd. 010, Nr. 084 (P-442), 3. April 1986 (1986-04-03) & JP 60 220834 A (HITACHI SEISAKUSHO KK), 5. November 1985 (1985-11-05)

## Beschreibung

Die Erfindung betrifft eine Messeinrichtung zur Ermittlung von Drehmomenten, die auf eine Welle, insbesondere einen Antriebsstrang eines Kraftfahrzeuges einwirken, bei welchem über torsionsabhängig verdrehende magnetisch leitfähige Topografien, die magnetfeldleitschlüssig mit einem Magnetfeld verbunden sind, deren Feldverhalten mit Magnetfeldsensoren gemessen und daraus die einwirkenden Drehmomente ermittelt Werden.

Messeinrichtungen dieser Art werden insbesondere zur Ermittlung von Drehmomenten, die von einer Verbrennungskraftmaschine auf einen Antriebsstrang eingebracht werden, verwendet. Der Drehmomentabgriff erfolgt dabei über ein Getriebe, welches über eine Kupplung vom Verbrennungsmotor getrennt wird. Die Komponenten befinden sich vorzugsweise, wie bereits ausgeführt, in einem Kraftfahrzeug. Zur Messung des Drehmomentes müssen Torsionen in Abhängigkeit vom Drehmoment gegeben sein. Dazu wird ein geeignetes rotierendes Element ausgewählt, von welchem das Drehmoment übertragen wird. Die Welle bzw. der Antriebsstrang enthält einen Wellen- oder Strangabschnitt, der als Torsionselement drehschlüssig in die Welle oder den Antriebsstrang eingebracht ist. Im Bereich dieses Torsionselementes, welches sich drehmomentabhängig verdreht bzw. tordiert, werden bekanntermaßen durch magnetische Mittel daraus die Torsionen bestimmt, d.h., aus den bekannten Materialparametern und den ermittelten Torsionen wird das jeweils aktuell anliegende Drehmoment ermittelt. Neben magnetischen Abgriffverfahren, die aus der EP 0 682 238 B1 und der US 4 984 474 bekannt sind, bei denen mit der Torsionswelle mitdrehende Ringplatten verwendet werden, deren Magnetfeldverlauf bei entsprechender Torsion gemessen wird. Die beiden hier bekannten Verfahren ermitteln dabei die Magnetfeldstärken, die sich aus der Verschiebung von aufeinanderwirkenden Oberflächentopografien von zwei Ringscheiben oder anderen beweglichen Elementen zueinander bei der Torsion ergeben.

Nachteil bei einem Verfahren dieser Art ist, dass das Magnetfeld, welches dort zur Bestimmung des Torsionswinkels herangezogen wird, nicht nur eine Funktion des Torsionswinkels selbst ist, sondern auch eine Funktion der Materialalterung und der baulichen Maßgaben, d.h., der jeweils individuell sich ergebenden Luftspalte. Die dabei verwendeten Topografien sind so strukturiert, dass diese sich ergebenden Polschuhflächen sich bei einer Torsion der Welle mehr oder weniger überdecken. Diese Überdeckung und damit in Folge die Veränderung des über einen Permanentmagneten eingegebenen Magnetfeldes im Bereich der Luftspalte, ist in der Tat eine Funktion des Torsionswinkels aber auch eine Funktion der absoluten Abstände. Außerdem variiert dieser Feldwert im Spalt, wie oben bereits ausgeführt, mit der Alterung, beispielsweise der verwendeten Permanentmagneten. Insofern kann das Messergebnis erheblich verfälscht sein.

Die DE 198 17 886 C1 beschreibt eine Vorrichtung zur Erfassung des auf eine Welle wirkenden Drehmoments, bei der die Drehmomenterfassung unter Zuhilfenahme eines ortsfesten Magnets vor der drehenden Welle umgesetzt wird.

Außerdem sind aus dem Stand der Technik telemetrische Meßsysteme bekannt. Diese Systeme weisen für den Serieneinsatz gleich mehrere Nachteile auf. Sie benötigen eine Energieeinspeisung auf dem rotierenden Element, was vergleichsweise viel Bauraum aufzehrt und die Applikation auf dem rotierenden Element aufwendig macht.

Weitere bekannte Systeme, die in elektrischen Lenkhilfssystemen eingesetzt werden und diese Nachteile nicht aufweisen, haben prinzipbedingt geringere Abtastraten.

Weitere bekannte Verfahren verwenden Lamellen, die ineinandergreifen, welche abwechselnd auf zwei Scheiben montiert sind. Hierbei besteht jedoch ein Nachteil in den Abtastraten.

Aus der DE 197 30 398 A1 ist eine Vorrichtung zur Drehmomentbestimmung in einer Doppelkupplung in einem Motorantriebsstrang bekannt. Primär- und Sekundärmassenschwungrad weisen jeweils ein Markierungen tragendes Geberteil auf, beispielsweise eine Umfangsverzahnung, die von einem im Gehäuse feststehenden Abtastteil erfasst werden. Aufgrund der relativen Verdrehung der beiden Schwungräder gegeneinander kann, da die Drehsteifigkeit zwischen den beiden Schwungrädern bekannt ist, das anliegende Drehmoment bestimmt werden. Jedoch benötigt diese Anordnung eine relativ große Verdrehung der beiden Schwungräder gegeneinander, wenn die relative Winkelverdrehung genau bestimmt werden soll. Für kleine relative Verdrehungen der Schwungräder gegeneinander ist diese Vorrichtung weniger geeignet.

In der EP 0682 238 A1 ist eine Drehmomentmesseinrichtung für eine Welle offenbart, bei der die Verdrehung zwei sich gegenüberstehender, auf der Welle angeordneter Rotoren mittels eines Magnetfeldes gemessen wird und mit der gemessenen Verdrehung das auf die Welle ausgeübte U-Magnet aufgebaut, der die beiden Rotoren umschließt und dessen Magnetfluss sich durch die beiden Rotoren schließt. Beide Rotoren bestehen jeweils aus einer Ringplatte aus nicht magnetischem Werkstoff und weisen jeweils zwei konzentrische Kronen aus ferro-magnetischen Klötze auf, wobei die Klötze des ersten Rotors gegenüber den Klötzen des zweiten Rotors angeordnet sind. Bei der Verdrehung der beiden Rotoren gegeneinander ändert sich der magnetische Fluss durch die relative Verschiebung der Klötze zueinander und wird durch magnetische Hallsensoren gemessen, die außerhalb der Rotoren im Luftspalt zum U-Magnet angebracht sind. Die relative Änderung des magnetischen Flusses ist direkt ein Signal für die relative Verdrehung der Rotoren zueinander. Nachteilig ist hier, dass ein externer U-Magnet benötigt wird und dass die beiden Rotoren relativ aufwendig herzustellen sind, da sie aus nichtmagnetischem Grundwerkstoff und einer Vielzahl von magnetischen Klötzen bestehen.

Der Erfindung liegt daher die Aufgabe zugrunde, eine Messeinrichtung der gattungsgemäßen Art dahingehend weiterzubilden, dass die Torsion und daraus die ermittelbare Drehmomenteinwirkung auf die Welle unabhängig bzw. weitestgehend unabhängig, von der Einhaltung baulicher Toleranzen und der Alterung verwendeter Magnetsysteme ist.

Die gestellte Aufgabe wird mittels einer Vorrichtung gemäß des Patentanspruches 1 gelöst.

Weitere vorteilhafte Ausgestaltungen der erfindungsgemäßen Vorrichtung sind in den abhängigen Ansprüchen 2 bis 9 angegeben.

Die Erfindung besteht darin, dass lediglich über die Phasenlage und/oder die Richtung des Magnetfeldverlaufes zwischen zwei mit der Welle drehfest verbundene magnetische Topografien mittels eines Magnetfeldsensors und nachgeschalteten elektronischen Mitteln die Torsion als Funktion der Zeit erfassbar und daraus die aktuellen Drehmomente ermittelbar sind. Hierzu weist die Welle einen torsionsrelevanten Wellenabschnitt auf, der zwischen zwei rotationssymmetrischen Drehschwingmassen liegt, auf denen die magnetisch leitfähigen Topografien angeordnet sind und über einen Luftspalt beabstandet gegenüberliegend angeordnet sind. Ähnliche Anordnungen sind zwar oben bereits aus dem Stand der Technik beschrieben und bekannt, jedoch nicht in der Form, dass die letztendlich ermittelte Größe zur Bestimmung des Drehmomentes nicht das absolute Magnetfeld ist, sondern die Phasenlage und die Richtung des Magnetfeldes mittels der oben beschriebenen Schwellwerte ermittelt wird. Ein Magnet ist zwischen den Drehschwungmassen so ausgerichtet, dass die erzeugten Magnetfeldlinien vom Mittelpunkt einer der Drehschwungmassen zum äußeren Rand dem bevorzugten Verlauf folgen und über die gegenüberliegende Drehschwungmasse und die dortigen Topografien den Magnetkreis schließen. Eine Auswertung der Magnetfelddichte über den Umfang gibt somit Auskunft über die Lage der Drehschwungmassen zueinander. Die Magnetfelddichte wird mit einem Magnetfeldsensor gemessen. Dieser Sensor kann bei drehenden Wellen in einer fixen Position angebracht werden. Diese fixe Position ist so auszuwählen, dass die Feldlinien im äußeren Umfang der Drehschwungmassen gemessen werden, auf den dann das Profil bzw. die Topografien angebracht sind. Bei der beschriebenen Ausgestaltung ergeben sich auch keine mechanischen Grenzen oder Anschläge. Das Überschreiten des Messbereiches ist demnach ohne Beschädigung der Messeinrichtung. Dies wiederum hat zur Folge, dass jede beliebige Abtastanzahl pro Umdrehung realisiert werden kann. Vorteilhaft bei dieser Ausführung ist weiterhin, dass die Drehschwungmassen, d.h., Profilscheiben, gleichzeitig eine abschirmende Wirkung gegenüber fremden elektromagnetischen Störungen bieten, weil zwischen den Drehschwungmassen, d.h., den Profilscheiben, gemessen wird. Aus dem Magnetfeldverlauf wird ein elektrisches Signal generiert. In einer bevorzugten Ausführung wird das Signal mit einem Referenzwert verglichen. Liegt das Signal oberhalb der Referenz oder des Schwellwertes, so wird es als logisch 1 bewertet. Liegt es unterhalb so wird es als logische Null bewertet. Daraus ergibt sich über dem Drehwinkel ein Rechtecksignal. Das Tastverhältnis des Signals ist somit von der Phasenverschiebung der sogenannten Eingangswelle und der Ausgangswelle abhängig. Die Frequenz ist von der Drehzahl und der Auflösung abhängig. In einer bevorzugten Anwendung wird das Referenzsignal bzw. die Schwellwerte adaptiv nachgeführt, in Abhängigkeit von Minimal- und Maximalwert des Eingangssignals.

Die Anzahl der Abtastungen wird durch das Profil bestimmt. Wird eine hohe Abtastrate gefordert, muss feiner profiliert werden. Die Profilierung, d.h., die Topografiegestaltung hat hierbei Einfluss auf die Auflösung der Messung der Torsion und damit der Bestimmung des Drehmomentes.

Erfindungsgemäß sind elektronische Auswertemittel vorgesehen, die dazu dienen, ein aus der Magnetfeldstärke generiertes elektrisches Signal lediglich über und unter gegebenen Schwellwerten zu berücksichtigen, derart, dass im Ergebnis nur noch ein rechteckförmiger Signalverlauf gebildet wird, ein Tastverhältnis des rechtwinkligen Signalverlaufs zu ermitteln und aus dem Tastverhältnis die Phasenlage zwischen den Topographien abzuleiten.

Eine weitere Möglichkeit besteht darin, dass die Topografien auf jeder Drehschwingmasse konzentrisch angeordnet aus zwei Reihen von verteilten erhabenen Kreisringsegmenten bestehen. Dabei ist weiter ausgestaltet, dass die Topografien auf mindestens einer Drehschwingmasse so verteilt sind, dass die Topografien der ersten Reihe zu den Topografien der zweiten Reihe drehversetzt angeordnet sind. Auch hierbei ist der daraus resultierende Signalverlauf nachfolgend näher beschrieben.

Hierbei können in im Nachfolgenden noch näher beschriebenen Varianten auch mehrere sogenannte Spuren von Kreisringsegmenten, die konzentrisch zueinander liegen, auf den Drehschwungmassen, d.h., in Profilscheiben angeordnet sein. Die daraus resultierenden Funktionen sind nachfolgend noch näher beschrieben. Im Übrigen ist die Verwendung von Drehschwungmassen in dieser Bauform letztendlich dahin resultierend, dass ein Zweimassenschwungradsystem entsteht, welches besonders vorteilhaft bei Verbrennungsmaschinen, d.h. in dem damit gekoppelten Antriebsstrang verwendet werden kann.

Weiterhin ist vorteilhaft ausgestaltet, dass die Topografien aus radial- und rotationssymmetrisch auf den Drehschwingmassen verteilten erhabenen Kreisringsegmenten mit gleich langen Lücken dazwischen, bestehen.

Weiterhin ist ausgestaltet, dass die Verteilung und die Abmessungen der Topografien der einen Drehschwingmasse und der der anderen Drehschwingmasse gleich sind. Dies gilt jedoch für ein bestimmtes Ausführungsbeispiel, welches später noch näher ausgeführt wird.

Eine weitere Möglichkeit besteht darin, dass die Verteilung und die Abmessungen der Topografien der einen Drehschwingmasse phasenversetzt zu denen der anderen Drehschwingmasse ist. Hierdurch ergeben sich Auswertungsmöglichkeiten, die auch nachfolgend näher beschrieben werden.

In weiterer Ausgestaltung der Erfindung wird ein Permanentmagnet zur Einspeisung eines Magnetfeldes, welches zu bzw. über die Topografien geleitet wird, verwendet.

Eine alternative Möglichkeit besteht in der Verwendung eines Elektromagneten, der wie der Permanentmagnet ebenfalls um die Welle angeordnet ist.

Weiterhin ist der Magnetfeldsensor radial außen im Spalt angeordnet, wobei hierbei mindestens ein Sensor verwendet wird bzw. werden muss. Optimal ist eine Position genau im Luftspalt zwischen den beiden Drehschwungmassen.

Die Drehschwungmassen mit den darauf angeordneten Topografien, welche magnetisch leitfähig sind, können auch insgesamt als sogenannte Profilscheiben bezeichnet werden. Der zwischen den beiden Scheiben oder Drehschwungmassen ausgerichtete Magnet kann ein Permanentmagnet oder aber auch ein Elektromagnet sein. Liegen die Topografien der Drehschwungmassen direkt gegenüber, ist die Magnetflussdichte besonders hoch. Liegt die Erhebung einer Profilscheibe gegenüber einer Vertiefung der anderen Scheibe, ist der Magnetfluss reduziert. Der Magnet, der das magnetische Feld liefert, ist dabei vorzugsweise ein Permanentmagnet, wobei dieser keine Energieeinspeisung benötigt. Jedoch ist die Verwendung eines Elektromagneten auch denkbar.

Anhand eines Verfahrens soll die Erfindung im Folgenden weiter verdeutlicht werden:
Das Verfahren besteht darin, dass lediglich über die Phasenlage und/oder Richtung des Magnetfeldverlaufes zwischen zwei magnetischen Topografien mittels eines Magnetfeldsensors die Torsionen als Funktion der Zeit erfasst und daraus die aktuellen Drehmomente ermittelt werden. Hierbei wird im Unterschied zum eingangs beschriebenen Stand der Technik nicht die Magnetfeldstärke als solches als Messsignal ausgewertet und daraus die Torsion und hernach das Drehmoment bestimmt, sondern es wird lediglich die Phasenlage und die Richtung des Magnetfeldverlaufes bei der Veränderung der Topografien zueinander während einer Torsion ermittelt.

Damit wird man im Gegensatz zum Stand der Technik unabhängig von der Einhaltung von Einbautoleranzen und einzuhaltender Luftspalte und im Übrigen auch unabhängig von der Alterung des Magnetsystems.

In weiterer Ausgestaltung des Verfahrens ist daher in vorteilhafter Weise vorgeschlagen, dass der Magnetfeldverlauf lediglich über und unter gegebenen Schwellwerten berücksichtigt wird, derart, dass im Ergebnis nur noch ein rechteckförmiger Signalverlauf gebildet wird. Dies bedeutet, dass die Magnetfeldstärke nicht mehr in der absoluten Wertigkeit bewertet wird und in die Messung eingeht, sondern dass lediglich das Vorhandensein des Magnetfeldes oder des Verlaufes oberhalb gegebener Schwellwerte berücksichtigt wird. Dadurch besteht eine binäre Auswertung, die lediglich nur noch berücksichtigt, ob ein Signal ausreichend groß ist und somit den logischen Wert 1 annimmt oder nicht mehr ausreichend groß genug ist und somit den Wert Null annimmt.

In weiterer vorteilhafter Ausgestaltung des Verfahrens ist angegeben, dass die Schwellwerte veränderbar sind. Hierdurch kann das System nach Einbau bzw. Montage lediglich auf die Schwellwerte kalibriert werden. Eine weitere Möglichkeit besteht jedoch auch darin, dass in weiterer Ausgestaltung die Schwellwerte in Abhängigkeit zu den maximal bzw. minimal verfügbaren Magnetfeldwerten adaptiv nachgeführt werden. Das bedeutet, dass das System Situationen, in denen der Wert des resultierenden Magnetfeldes entweder durch bauliche Maßnahmen oder aber im Betrieb oder durch Alterung verändern kann, adaptiv nachgeführt wird. D.h. in diesem Fall werden die Schwellwerte nachgeführt. Auch hierbei wird den baulichen oder auch alterungsbedingten Unzulänglichkeiten des Systems eine adaptive Nachregelung übergeordnet, so dass das System auch weiterhin zuverlässig arbeitsfähig bleibt.

In weiterer vorteilhafter Ausgestaltung ist angegeben, dass in Abhängigkeit zum ermittelten Drehmomentverhalten der Welle bzw. des Antriebstranges der Antriebseingriff zur Welle bzw. zum Antriebsstrang bedämpft wird. Hierdurch erfolgt bereits eine Berücksichtigung ermittelter Drehmomente, die aus dem System bestimmbar sind und wirken somit auf die genannte Dämpfung regelnd ein. In weiterer Ausgestaltung ist vorgesehen, dass diese Dämpfung durch eine entsprechend geregelte Schlupfsteuerung eines mit der Welle gekoppelten Kopplungselementes bzw. durch eine mit dem Antriebsstrang verbundene Kupplung erfolgt.

In bevorzugter Anwendung des Verfahrens ist vorgesehen, dass die ermittelten Drehmomente und/oder die zur Ermittlung eingestellten und angepassten Schwellwerte und/oder die zur Dämpfung ermittelten Schlupfsteuerwerte elektronisch in einem adaptiven Datenfeld abgespeichert und untereinander so korrelierbar sind, dass adaptiv optimierte Kennfelder zur letztendlichen Dämpfung ermittelt werden können. Aus diesen Kennfeldern und auch der adaptiven Anlegung des Systems, welches sich ständig nachführt, wird gewährleistet, dass zum einen Verschleiß oder Alterung für die Zuverlässigkeit der Drehmomentermittlung unerheblich ist. Zum anderen kann aber durch die kennfeldgemäße Korrelation mit den auf die ermittelten Drehmomente ausgesteuerten Stellwerte für die Schlupfregelung eine adaptive Optimierung im Betriebsverhalten, beispielsweise im Fahrverhalten eines Kraftfahrzeuges bewirkt werden. D.h., dass das System im Fahrbetrieb selbstlernend ist, und in bestimmten, z.B. auch wiederkehrenden Fahrsituationen stets eine optimale Schlupfregelung dadurch generieren kann, dass ein bereits vorbekannter Stellwert angesteuert und somit steuerzielnah gesteuert werden kann.

Die Erfindung ist in der Zeichnung dargestellt und nachfolgend näher beschrieben.

Es zeigt:

Figur 1: Prinzipskizze der Anordnung

Figur 2: Drehschwungmasse/Profilscheibe

Figur 3: Signaltechnische Abwicklung der profilierten Drehschwungmasse

Figur 4: Signalverlauf in Abhängigkeit von der Phasenlage

Figur 5a: Drehschwungmasse mit zwei Spuren ungleichen Profiles

Figur 5b: Drehschwungmasse mit zwei Spuren gleichen Profiles

Figur 6: Signalverlauf

Figur 7: Signalverlauf

Figur 8: Drehschwungmasse mit 2. Sensor

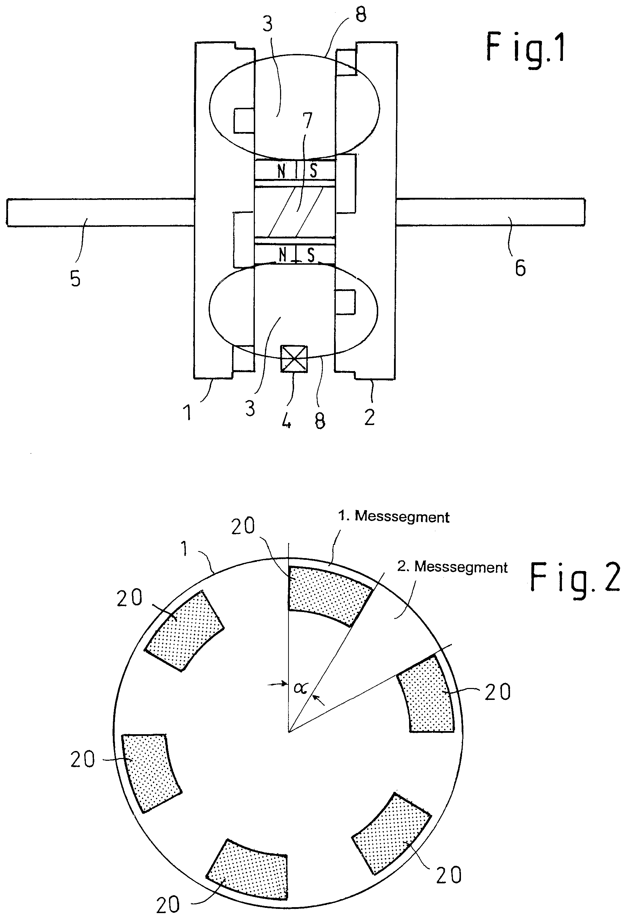

Figur 1 zeigt eine Messeinrichtung, bestehend aus zwei Drehschwungmassen 1 und 2 sowie mit einem Permanentmagneten 3, der zwischen den Drehschwungmassen 1 und 2 angeordnet ist. Das Magnetfeld wird mit dem Magnetfeldsensor 4 gemessen. Die Drehschwungmasse 1 ist mit dem eingangsseitig definierten Wellenabschnitt 5 drehfest verbunden, und die Drehschwungmasse 2 ist mit dem als Ausgangswelle 6 definierten Wellenabschnitt verbunden. Der Wellenabschnitt 5 und der Wellenabschnitt 6 sind über ein Torsionselement 7 miteinander verbunden. Das Torsionselement 7 verwindet sich um einen Phasenwinkel in Abhängigkeit vom übertragenen Drehmoment. Das Torsionselement kann in jeder beliebigen Anordnung der Wellenabschnitte 5 und 6 verwinden.

In Figur 2 wird der Aufbau der beiden identischen Drehschwungmassen gezeigt.
Figur 2 veranschaulicht dabei noch einmal den Messbereichs- oder Phasenmesswinkel Alpha. Die dunklen Kreisringabschnitte zeigen das positive Profil bzw. die erhabenen Topografien der Drehschwungmasse 1. Der Messbereich reicht von der vollständigen Überdeckung des ersten Messsegmentes der ersten Drehschwungmasse mit dem ersten Messsegment der zweiten Drehschwungmasse bis zur vollständigen Überdeckung des ersten Messsegmentes der ersten Drehschwungmasse mit dem zweiten Messsegment der zweiten Drehschwungmasse. Daraus ergibt sich der maximale Phasenwinkel Alpha.

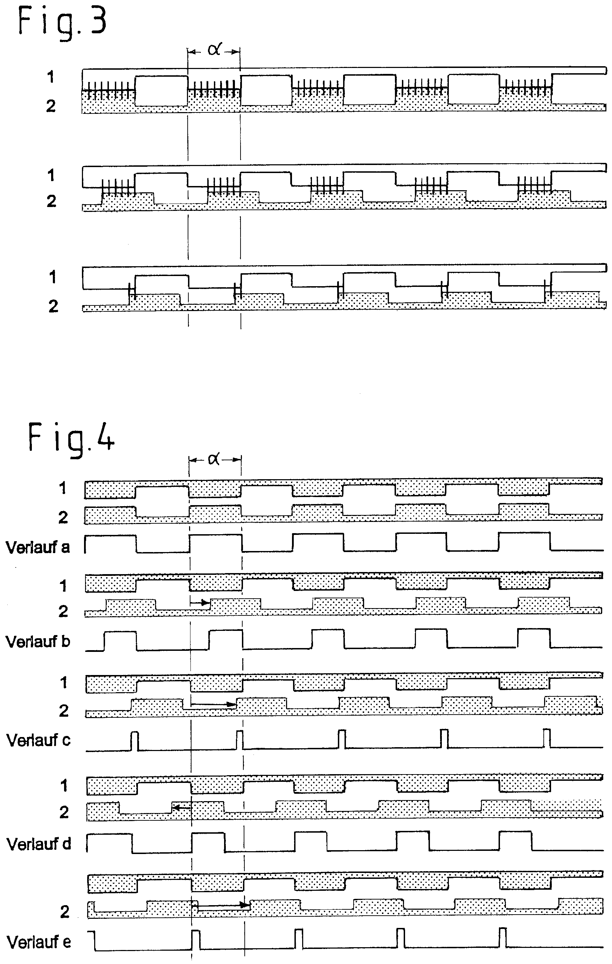

In der Abwicklung des Umfanges der Drehschwungmasse in Figur 3 wird die unterschiedliche Überdeckung je nach Phase der beiden Scheiben dargestellt sowie die Bereiche hoher Flussdichte. Daraus folgt nach entsprechender Auswertung der Signalverlauf der in Figur 4 gezeigt wird. Die Pfeile innerhalb des Messbereiches zeigen die Phasenverschiebung an. Das Tastverhältnis steht in linearer Beziehung zur Phase. Die Verläufe a), b) und c) liegen im Messbereich. Verlauf d) zeigt einen Signalverlauf mit dem Moment außerhalb des Messbereiches an, welcher ein entgegen gesetztes Vorzeichen zu a) aufweist, jedoch mit gleichem Betrag. Der Verlauf e) zeigt das Signal bei Überschreitung des Phasenmesswinkels. Das Signal von Verlauf d) entspricht dem des Signals aus Verlauf a) sowie das Signal aus Verlauf e) dem von Verlauf c) entspricht. Das Problem der Mehrdeutigkeit wird, wie nachfolgend erläutert, gelöst.

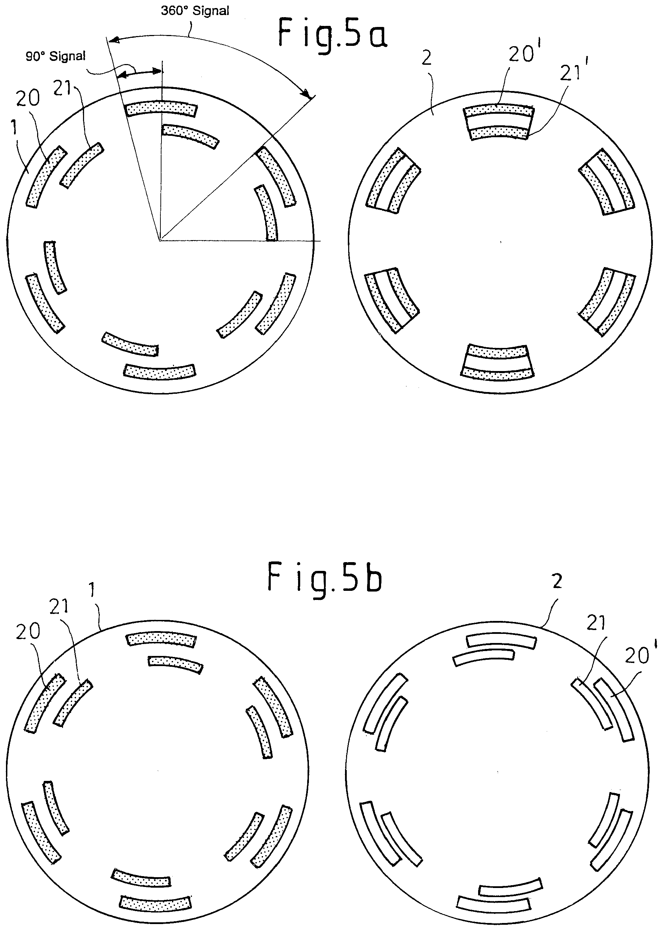

In Figur 5 a wird ein möglicher Aufbau der Drehschwungmassen mit zwei Spuren gezeigt. In dieser Ausführung ist eine Drehschwungmasse, d.h., eine Profilscheibe mit zwei gleichen Profilen, d.h. Topografien versehen und eine Scheibe mit zwei Profilen, die zueinander einen Phasenversatz von 90 Grad aufweisen. Hierbei ist jedoch zu beachten, dass der Versatz von 90 Grad sich auf die Periodendauer des Signals bezieht, welches durch das Profil bzw. die Topografie auf der Drehschwungmasse bzw. Scheibe generiert wird, und nicht den geometrischen Winkel repräsentiert.

Eine konstruktive Auswirkung mit 6 Kreisringsegmenten, also hervorgehobenen Topografien auf einem Kreisumfang ergibt eine Signalperiode, die auf einem Kreissegment von 60 Grad abgebildet wird. 90 Grad Phasenversatz im Signal bedeuten demnach einen geometrischen Versatz von 15 Grad der beiden Profilspuren. Diese Ausführung der Drehschwungmassen weist unterschiedliche Profile bzw. Topografien auf. Die Funktion ist für beide Fälle die gleiche. Zur Realisierung genau dieser Funktion ist jede weitere Ausführung geeignet, bei der aus der Überdeckung resultierende Phasenversatz der beiden Signale 90 Graf ist.

Figur 5 b zeigt ein Beispiel mit zwei Profilscheiben, jeweils 45 Grad Phasenversatz der Signalspuren. Vorteil dieser speziellen Ausführung ist, dass hier zum Erstellen des Profils bzw. der Topografie das gleiche Werkzeug zum Einsatz kommen kann. Der Signalverlauf ist für beide Ausführungsformen der Drehschwungmassen gemäß den Figur 5 a und 5 b identisch.

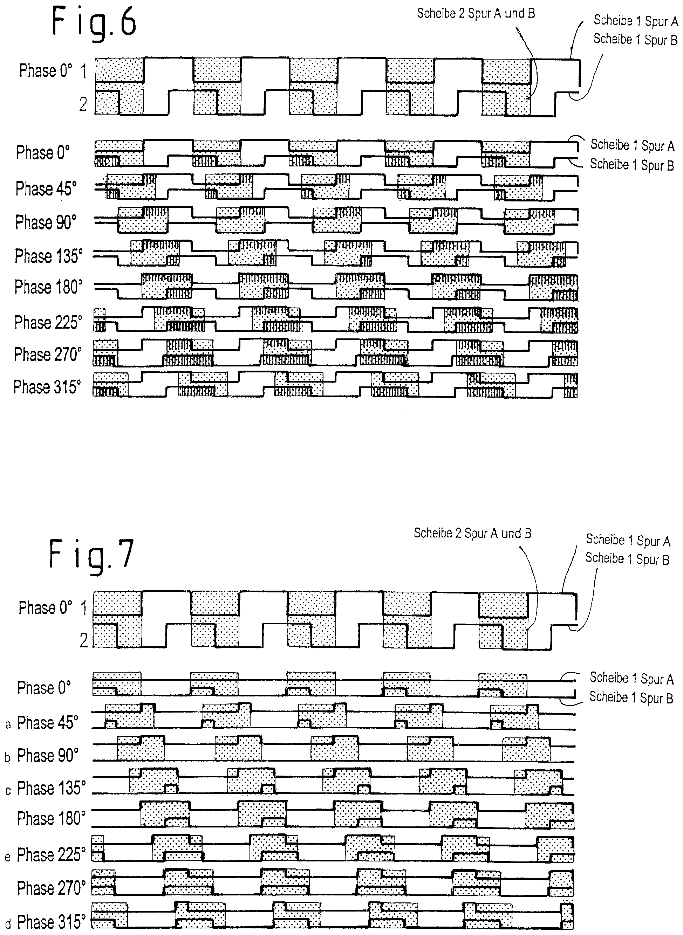

In der Abwicklung in Figur 6 wird die Überdeckung je nach Phase dargestellt. Die senkrechten Linien deuten die Bereiche hohe Flussdichten an. Die Bereiche hoher Flussdichte werden mittels eines Sensors und einer Auswerteeinheit erfasst und als digitales Signal in der oben beschriebenen Weise dargestellt bzw. realisiert. Dabei werden die Bereiche niedriger Flussdichte als Low-Pegel und die Bereiche hoher Flussdichte als High-Pegel dargestellt.

Figur 7 zeigt den resultierenden Signalverlauf. Die Signalverläufe a) bis e) entsprechen vom Fahrwinkel d) den in Figur 4. Betrachtet man ausschließlich Spur a), wird dies aufgrund des gleichen Signalverlaufes ersichtlich. Durch die weitere Information vom Signal der Spur b) ist die eindeutige Zuordnung bei gleichem Signalverlauf der Spur a) bei Über- und Unterläufen gegeben. Der Vergleich zwischen den Signalen für 45 Grad und 315 Grad in Figur 7 zeigt, dass das Signal der Spur a) das gleiche Tastverhältnis aufweist und das Tastverhältnis des Signals der Spur b) dient der Unterscheidung. Der zeitliche Bezug der Schaltflanken vom Signal der Spur a) zum Signal der Spur b) ist ein weiteres eindeutiges Kriterium.

Die Erweiterung um die Spur b) ermöglicht die Erfassung von Messbereichüberläufen, die wie in Figur 7, Verlauf d) und Verlauf e) dargestellt. Durch eine geeignete Verarbeitung der Signale der Spuren a) und b) und die Erfassung von Messbereichsüberläufen und Unterläufen wird die Auswertung von Phasenwinkeln größer als Phasenwinkel Alpha ermöglicht. Die Verarbeitung der Signale der Spuren a) und b) folgen einer Sensorauswerteeinheit, die vorzugsweise im Sensor integriert wird.

Der Magnetfeldsensor in Figur 1 ist in bevorzugter Weise als Halbleiterelement ausgeführt, welches eine Absolutmessung des Magnetfeldes durchführt. Weitere mögliche Ausführungen sind passive Spulen, die die Magnetfeldänderungen registrieren. Bevorzugte Ausführungen für Halbleitersensoren sind Magnetfeldsensoren wie Hallsensoren, welche die magnetische Flussdichte messen und eine Spannung in eindeutiger Abhängigkeit zur Magnetdichte ausgeben. Weitere Sensoren anderer Technologien sind hierbei ebenso verwertbar. Grundsätzlich können alle Sensoren deren Ausgangssignal oder Ausgangssignaländerung vom Magnetfeld abhängig ist, verwendet werden. Durch eine geeignete Verarbeitung ist es mit jedem dieser Magnetfeldsensoren möglich, die Bereiche hoher Flussdichte oder niedriger Flussdichte zwischen den Polscheiben zu detektieren und damit auch das Tastverhältnis, welches direkt auf die Phasenverschiebung der Profilscheiben zurückgeführt werden kann.

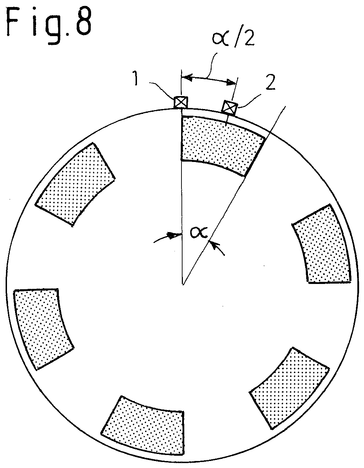

Eine weitere Möglichkeit die Abtastrate zu erhöhen, zeigt Figur 8. Diese besteht darin, mit einem weiteren Sensor auch den Umfang der Profilscheibe zu messen. Bei einer Abtastrate über den Abtastwinkel Beta wird dieser in zweckmäßiger Weise bei Beta/halbe montiert. Werden N Sensoren montiert, werden diese um 0 * Beta/N,

1 * Beta/N, .... (N − 1)*Beta/N montiert.

Mit N Sensoren ergibt sich die N-fache Abtastrate. Die Abtastrate dergestalt zu erhöhen, kann bei allen hier beschriebenen Systemen angewendet werden.

Im Hinblick auf ein Software-Programmprodukt sind die beschriebenen Funktionen in Form eines Computerprogramms auf einem Datenträger abgelegt. Eine Messeinrichtung der beschriebenen Art oder eine Messeinrichtung bei der in gleicher oder ähnlicher Weise eine Torsion praktisch abgegriffen wird, lässt sich hierbei über eine Auswerteeinheit steuern, in die das Software-Programmprodukt mit den implementierten Funktionen einlesbar ist und die entsprechenden Funktionen dann mit der entsprechenden Messeinrichtung in der erfindungsgemäßen Weise ausgeführt werden können. Die Datenschnittstelle für die Eingabe- bzw. nachträgliche Implementierung des Software-Programms mit den beschriebenen Funktionen kann durch Wechselspeichermedien oder aber auch durch direkten Datentransfer aus einem Computer oder einem Datenschreibgerät oder beispielsweise im Zuge einer Servicedienstleistung via Internet abgerufen und dort eingelesen werden. Solche erfindungsgemäßen Messeinrichtungen können in vorteilhafter Weise, wie oben bereits beschrieben, im Antriebsstrang zwischen Getriebe- und Verbrennungsmotor eines Kraftfahrzeuges sinnvoll angebracht werden.

Darüberhinausgehend ist die Messeinrichtung auch überall dort sinnvoll einsetzbar, in denen Drehmomente auf Stellwellen einwirken, wenn die Größe des Drehmomentes dort eine Rolle spielt. So sind beispielsweise auch Einsatzfälle in Lenksystemen oder auch in Fertigungssystemen denkbar, in denen über Drehwellen Kräfte in mechanische Komponenten motorisch eingeleitet werden, deren Drehmoment gesteuert werden soll.

## Patentansprüche

1. Messeinrichtung zur Ermittlung von Drehmomenten, die auf eine Welle (5, 6) mit einem torsionsrelevanten Wellenabschnitt (7), insbesondere einen Antriebsstrang eines Kraftfahrzeuges einwirken, wobei die Messeinrichtung umfasst:

- zwei mit der Welle (5, 6) drehfest verbundene magnetisch leitfähige Topographien (20, 21, 20', 21') die torsionsabhängig verdrehbar sind;
- zwei rotationssymmetrische Drehschwungmassen (1, 2), zwischen denen der torsionsrelevanten Wellenabschnitt (7) liegt und auf denen die magnetisch leitfähigen Topographien (20, 21, 20', 21') sich über einen Luftspalt beabstandet gegenüberliegend angeordnet sind;
- ein Magnet, der zwischen den Drehschwungmassen (1, 2) so ausgerichtet ist, dass die erzeugten Magnetfeldlinien vom Mittelpunkt einer der Drehschwungmassen zum äußeren Rand dem bevorzugten Verlauf folgen und über die gegenüberliegende Drehschwungmasse und die dortigen Topographien den Magnetkreis schließen;

- wenigstens ein Magnetfeldsensor (4), der dazu dient, ein Feldverhalten der magnetisch leitfähigen Topographien, die leitschlüssig mit einem Magnetfeld verbunden sind, zu messen, und so ortsfest angebracht ist, dass die Magnetfeldlinien im äußeren Umfang der Drehschwungmassen messbar sind;

- nachgeschaltete elektronische Mittel zur Ermittlung der einwirkenden Drehmomente in Abhängigkeit der Phasenlage zwischen den magnetisch leitfähigen Topographien,

- elektronische Auswertemittel, die dazu dienen, ein aus der Magnetfeldstärke generiertes elektrisches Signal lediglich über und unter gegebenen Schwellwerten zu berücksichtigen, derart, dass im Ergebnis nur noch ein rechteckförmiger Signalverlauf gebildet wird, ein Tastverhältnis des rechtwinkligen Signalverlaufs zu ermitteln und aus dem Tastverhältnis die Phasenlage zwischen den Topographien abzuleiten.

**2.** Messeinrichtung nach Anspruch 1, **dadurch gekennzeichnet, dass** die Topographien (20, 21) bzw. (20', 21') auf jeder Drehschwungmasse aus zwei konzentrisch angeordneten Reihen von verteilten erhabenen Kreisringsegmenten bestehen, wobei die Topographien (20, 21) bzw (20', 21') auf mindestens einer Drehschwungmasse (1) bzw (2) so verteilt sind, dass die Topographien der 1. Reihe zu den Topographien der 2. Reihe drehversetzt angeordnet sind.

**3.** Messeinrichtung nach Anspruch 2, **dadurch gekennzeichnet, dass** die Kreisringsegmente radial und rotationssymmetrisch auf den Drehschwungmassen (1, 2) mit gleich langen Lücken dazwischen verteilt sind.

**4.** Messeinrichtung nach Anspruch 2 oder 3, **dadurch gekennzeichnet, dass** die Verteilung und die Abmessungen der Topographien (20, 21) bzw (20', 21') der einen Drehschwungmasse (1) mit denen der anderen Drehschwungmasse (2) gleich ist.

**5.** Messeinrichtung nach Anspruch 2 oder 3, **dadurch gekennzeichnet, dass** die Verteilung und die Abmessungen der Topographien (20, 21) bzw (20',21') der einen Drehschwungmasse (1) phasenversetzt zu denen der anderen Drehschwungmasse (2) angeordnet ist.

**6.** Messeinrichtung nach einem der Ansprüche 1 bis 5, **dadurch gekennzeichnet, dass** zur Einleitung eines Magnetfeldes in das magnetisch leitfähige System ein Permanentmagnet (3) vorgesehen ist, der zylindrisch und um die Welle bzw den tordierbaren Wellenabschnitt (7) angeordnet ist.

**7.** Messeinrichtung nach einem der Ansprüche 1 bis 5, **dadurch gekennzeichnet, dass** zur Einleitung eines Magnetfeldes in das magnetisch leitfähige System ein Elektromagnet vorgesehen ist, der zylindrisch und um die Welle angeordnet ist.

**8.** Messeinrichtung nach einem der Ansprüche 1 bis 7, **dadurch gekennzeichnet, dass** der Magnetfeldsensor (4) außen radial im Spaltbereich zwischen den Drehschwungmassen (1, 2) angeordnet ist.

**9.** Messeinrichtung nach einem der Ansprüche 1 bis 8, **dadurch gekennzeichnet, dass** die Auswertemittel auch mit mindestens einer Datentransferschnittstelle versehen sind.

**Claims**

**1.** Measuring device for determining torques which act on a shaft (5, 6) having a torsionally relevant shaft section (7), in particular a drivetrain of a motor vehicle, wherein the measuring device comprises:

- two magnetically conductive topographies (20, 21, 20', 21') connected non-rotatably with the shaft (5, 6), which are rotatable depending on the torsion;
- two rotationally symmetrical rotary flywheel masses (1, 2), between which the torsionally relevant shaft section (7) is situated and on which the magnetically conductive topographies (20, 21, 20', 21') are disposed lying opposite spaced by an air gap;
- a magnet which is oriented between the rotary flywheel masses (1, 2) such that the generated magnetic field lines follow the preferred course from the middle point of one of the rotary flywheel masses to the outer edge and close the magnetic circuit over the oppositely-situated rotary flywheel mass and the topographies there;
- at least one magnetic field sensor (4) which serves to measure a field behaviour of the magnetically conductive topographies, which are conductively connected with a magnetic field, and which is fixed in stationary manner such that the magnetic field lines in the outer circumference of the rotary flywheel masses are measurable;
- electronic means connected downstream for determining the acting torques depending on the phase relation between the magnetically conductive topographies,
- electronic evaluation means which serve to take into consideration an electrical signal generated out of the magnetic field strength only above and below given threshold values such that in the result only a rectangular signal profile is formed, to determine a duty cycle of the rectangular signal profile and from the duty cycle to deduce the phase relation between the topographies.

2. Measuring device according to claim 1, **characterised in that** the topographies (20, 21) or (20', 21') on each rotary flywheel mass are composed of two concentrically disposed rows of distributed raised annular segments, wherein the topographies (20, 21) or (20', 21') are distributed on at least one rotary flywheel mass (1) or (2) such that the topographies of the first row are disposed rotationally offset to the topographies of the second row.

3. Measuring device according to claim 2, **characterised in that** the annular segments are distributed radially and rotationally symmetrically on the rotary flywheel masses (1, 2) with gaps therebetween of equal length.

4. Measuring device according to claim 2 or 3, **characterised in that** the distribution and the measurements of the topographies (20, 21) or (20', 21') of the one rotary flywheel mass (1) are equal to those of the other rotary flywheel mass (2).

5. Measuring device according to claim 2 or 3, **characterised in that** the distribution and the measurements of the topographies (20, 21) or (20', 21') of the one rotary flywheel mass (1) are disposed phase displaced to those of the other rotary flywheel mass (2).

6. Measuring device according to any of claims 1 to 5, **characterised in that** for the introduction of a magnetic field into the magnetically conductive system a permanent magnet (3) is provided which is disposed cylindrically and around the shaft or the twistable shaft section (7).

7. Measuring device according to any of claims 1 to 5, **characterised in that** for the introduction of a magnetic field into the magnetically conductive system an electromagnet is provided which is disposed cylindrically and around the shaft.

8. Measuring device according to any of claims 1 to 7, **characterised in that** the magnetic field sensor (4) is disposed on the outside radially in the gap area between the rotary flywheel masses (1, 2).

9. Measuring device according to any of claims 1 to 8, **characterised in that** the evaluation means are also equipped with at least one data transfer interface.

**Revendications**

1. Dispositif de mesure pour la détermination de couples qui agissent sur un arbre (5, 6) avec un tronçon d'arbre (7) concerné par une torsion, en particulier une transmission de véhicule automobile, dans lequel le dispositif de mesure comprend :

   - deux topographies magnétiquement conductrices (20, 21, 20', 21') reliées à l'arbre (5, 6) solidaires en rotation, qui peuvent tourner en fonction d'une torsion ;
   - deux masses d'inertie rotatives à symétrie de rotation (1, 2), entre lesquelles se trouve le tronçon d'arbre (7) concerné par une torsion et sur lesquelles les topographies magnétiquement conductrices (20, 21, 20', 21') sont agencées opposées et séparées par une lame d'aire ;
   - un aimant qui est mis en place entre les masses d'inertie rotatives (1, 2) de sorte que les lignes de champ magnétique générées à partir du centre de l'une des masses d'inertie rotatives jusqu'au bord extérieur suivent la trajectoire préférée et se ferment sur la masse d'inertie rotative opposée et les topographies locales du circuit magnétique ;
   - au moins un capteur de champ magnétique (4), qui sert à mesurer le comportement de champ des topographies magnétiquement conductrices, qui sont connectées de manière conductrice à un champ magnétique, et est monté de manière fixe de sorte que les lignes de champ magnétique à la périphérie extérieure des masses d'inertie rotatives peuvent être mesurées ;
   - des moyens électroniques en aval pour déterminer les couples appliqués en fonction de l'angle de phase entre les topographies magnétiquement conductrices,
   - des moyens d'évaluation électroniques qui servent à prendre en compte un signal électrique généré par l'intensité du champ magnétique uniquement au-dessus et au-dessous de valeurs de seuil données, de sorte qu'ensuite seule une forme d'onde rectangulaire est formée, pour déterminer un rapport cyclique de la forme d'onde rectangulaire, et d'après le rapport cyclique, pour déduire le phasage entre les topographies.

2. Dispositif de mesure selon la revendication 1, **caractérisé en ce que** les topographies (20, 21) ou (20', 21') sont constituées sur chaque masse d'inertie rotative de deux rangées agencées de manière concentrique de segments annulaires circulaires en relief répartis, dans lequel les topographies (20, 21) ou (20', 21') sont réparties sur au moins une masse d'inertie rotative (1) ou (2), de sorte que les topographies de la 1ère rangée sont agencées décalées en rotation par rapport aux topographies de la 2ème rangée.

3. Dispositif de mesure selon la revendication 2, **caractérisé en ce que** les segments annulaires circulaires sont répartis de manière radiale et symétrique en rotation sur les masses d'inertie rotatives (1, 2) avec des espaces égaux entre eux.

4. Dispositif de mesure selon la revendication 2 ou 3, **caractérisé en ce que** la répartition et les dimensions des topographies (20, 21) ou (20', 21') de l'une masse d'inertie rotative (1) sont identiques à celles de l'autre masse d'inertie rotative (2).

5. Dispositif de mesure selon la revendication 2 ou 3, **caractérisé en ce que** la répartition et les dimensions des topographies (20, 21) ou (20', 21') de l'une masse d'inertie rotative (1) sont agencées avec un décalage de phase par rapport à celles de l'autre masse d'inertie rotative (2).

6. Dispositif de mesure selon l'une des revendications 1 à 5, **caractérisé en ce qu'**un aimant permanent (3) est prévu pour l'introduction d'un champ magnétique dans le système magnétiquement conducteur, qui est cylindrique et agencé autour de l'arbre ou du tronçon d'arbre (7) concerné par une torsion.

7. Dispositif de mesure selon l'une des revendications 1 à 5, **caractérisé en ce qu'**un électroaimant est prévu pour l'introduction d'un champ magnétique dans le système magnétiquement conducteur, qui est cylindrique et agencé autour de l'arbre.

8. Dispositif de mesure selon l'une des revendications 1 à 7, **caractérisé en ce que** le capteur de champ magnétique (4) est agencé radialement à l'extérieur dans la zone d'espace libre entre les masses d'inertie rotatives (1, 2).

9. Dispositif de mesure selon l'une des revendications 1 à 8, **caractérisé en ce que** les moyens d'évaluation sont également prévus avec au moins une interface de transfert de données.

Fig.1

1. Messsegment

2. Messsegment

Fig.2

# Fig.3

# Fig.4

# Fig.5a

360° Signal

90° Signal

20  21
1

2

20'

21'

# Fig.5b

21
20
1

2

21

20'

# Fig.6

Scheibe 2 Spur A und B

Scheibe 1 Spur A
Scheibe 1 Spur B

Phase 0° 1
2

Scheibe 1 Spur A
Scheibe 1 Spur B

Phase 0°

Phase 45°

Phase 90°

Phase 135°

Phase 180°

Phase 225°

Phase 270°

Phase 315°

# Fig.7

Scheibe 2 Spur A und B

Scheibe 1 Spur A
Scheibe 1 Spur B

Phase 0° 1
2

Scheibe 1 Spur A
Scheibe 1 Spur B

Phase 0°

a Phase 45°

b Phase 90°

c Phase 135°

Phase 180°

e Phase 225°

Phase 270°

d Phase 315°

# Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0682238 B1
- US 4984474 A
- DE 19817886 C1
- DE 19730398 A1
- EP 0682238 A1